# EUROPÄISCHE PATENTSCHRIFT

(11) **EP 3 262 300 B1**
(45) Veröffentlichungstag und Bekanntmachung des Hinweises auf die Patenterteilung: **22.09.2021**
(21) Anmeldenummer: 16703545.0
(22) Anmeldetag: 09.02.2016
(51) Int. Cl.: F04B 43/02, F04B 43/14, F04B 43/12, F04B 49/02, F01N 3/20, F04C 5/00

(54) **VERFAHREN ZUM BETRIEB EINER VORRICHTUNG ZUR DOSIERTEN BEREITSTELLUNG EINER FLÜSSIGKEIT**
METHOD OF OPERATING A DEVICE FOR THE PROVISION OF A LIQUID DOSAGE
PROCÉDÉ POUR OPÉRER UN DISPOSITIF POUR LA FOURNITURE DOSÉE D'UN LIQUIDE

(30) Priorität: 26.02.2015 DE 102015203437
(43) Veröffentlichungstag der Anmeldung: 03.01.2018
(73) Patentinhaber: Vitesco Technologies GmbH, 30165 Hannover (DE)
(72) Erfinder: BRÜCK, Rolf, 51429 Bergisch Gladbach (DE); BAUER, Peter, 95505 Immenreuth (DE); VORSMANN, Christian, 51105 Köln (DE); HODGSON, Jan, 53840 Troisdorf (DE)
(86) Internationale Anmeldenummer: PCT/EP2016/052703
(87) Internationale Veröffentlichungsnummer: WO 2016/134968

(56) Entgegenhaltungen:
- DE-A1-102011 010 644
- DE-A1-102013 101 412
- DE-A1-102013 104 250

## Beschreibung

Die Erfindung betrifft ein Verfahren zum Betrieb einer Vorrichtung zur dosierten Bereitstellung einer Flüssigkeit. Die Vorrichtung ist insbesondere zur dosierten Bereitstellung von flüssigen Abgasreinigungsadditiven für die Abgasreinigung mit dem SCR-Verfahren geeignet. Ein derartiges Abgasreinigungsadditiv ist beispielsweise eine Harnstoff-Wasser-Lösung. Eine 32,5 %-ige Harnstoff-Wasser-Lösung zur Reinigung von Abgas mit dem SCR-Verfahren ist unter dem Handelsnamen AdBlue® erhältlich.

In Vorrichtungen zur dosierten Bereitstellung von derartigen Flüssigkeiten kann ein bestimmter Pumpentyp zum Einsatz gelangen, der auch als Orbitalpumpe bezeichnet wird. Dieser Pumpentyp ist bspw. in den deutschen Patentanmeldungen DE 10 2013 104 250 A1, DE 10 2013 104 245 A1, DE 10 2013 104 242 A1 und DE 10 2013 102 129 A1 beschrieben. Problematisch bei diesem Pumpentyp ist, dass es schwierig ist, diesen Pumpentyp als Dosierpumpen zu betreiben. Bei einer Dosierpumpe ist die geförderte Menge an Flüssigkeit anhand von Betriebseingangsgrößen der Pumpe (bspw. Eingangsstrom oder Eingangsspannung oder Betriebsdauer der Pumpe) genau einstellbar und kontrollierbar. Ein entsprechendes Verfahren ist in der DE 10 2013 101 412 A1 offentbart.

Vor diesem Hintergrund ist es Aufgabe der hier vorliegenden Erfindung, die geschilderten Probleme des Standes der Technik zu lösen bzw. zumindest zu lindern. Es soll insbesondere ein verbessertes Verfahren zum Betrieb einer Vorrichtung zur dosierten Bereitstellung einer Flüssigkeit vorgeschlagen werden, wobei die Vorrichtung insbesondere eine Pumpe vom Typ einer Orbitalpumpe aufweist.

Diese Aufgaben werden gelöst mit einem Verfahren gemäß den Merkmalen des Patentanspruchs 1. Weitere vorteilhafte Ausführungsvarianten des Verfahrens sind in den abhängig formulierten Patentansprüchen angegeben. Es ist darauf hinzuweisen, dass die in den abhängig formulierten Patentansprüchen angegebenen besonderen Merkmalskombinationen in beliebiger technologisch sinnvoller Weise miteinander kombiniert werden und durch erläuternde Sachverhalte aus der Beschreibung ergänzt werden können.

Die Erfindung betrifft ein Verfahren zum Betrieb einer Vorrichtung zur dosierten Bereitstellung einer Flüssigkeit, wobei die Vorrichtung zumindest mindestens eine Pumpe zur Förderung der Flüssigkeit und mindestens einen Drucksensor aufweist. Diese mindestens eine Pumpe weist ein Pumpengehäuse mit mindestens einem Einlass und mindestens einem Auslass auf, wobei an dem Pumpengehäuse ein Exzenter angeordnet ist und wobei zwischen dem Pumpengehäuse und dem Exzenter eine verformbare Membran angeordnet ist, wobei die verformbare Membran und das Pumpengehäuse mindestens einen Förderweg von dem mindestens einen Einlass zu dem mindestens einen Auslass begrenzen und mindestens eine Abdichtung des Förderwegs ausbilden, wobei die mindestens eine Abdichtung durch eine Bewegung des Exzenters zur Förderung der Flüssigkeit entlang des Förderwegs verschiebbar ist. Der mindestens eine Drucksensor der Vorrichtung ist mit dem Auslass der Pumpe verbunden. Die Pumpe weist mindestens einen Hall-Sensor auf, mit welchem eine Winkelpositionsveränderung des Exzenters erkannt werden kann. Das Verfahren umfasst dabei zumindest die folgenden Schritte:
a) Fördern von Flüssigkeit mit der Pumpe;
b) Überwachen eines zeitlichen Druckverlaufs des Drucks an dem Auslass der Pumpe während der Förderung mit dem mindestens einen Drucksensor;
c) Feststellen einer Winkelposition des Exzenters der Pumpe anhand von mindestens einem charakteristischen Merkmal des zeitlichen Druckverlaufs an dem Auslass,
d) Bestimmen einer veränderten Winkelposition, ausgehend von der in Schritt c) ermittelten Winkelposition anhand der mit dem Hall-Sensor festgestellten Winkelpositionsveränderung.

Die Vorrichtung weist neben der beschriebenen Pumpe (insbesondere Orbitalpumpe) vorzugsweise einen Tank auf, in welchem die Flüssigkeit gespeichert ist und aus welcher die Flüssigkeit entnommen wird. Darüber hinaus weist die Vorrichtung vorzugsweise einen Injektor auf, mit welchem die von der Pumpe geförderte Flüssigkeit in eine Abgasbehandlungsvorrichtung einer Verbrennungskraftmaschine eindosiert werden kann. Eine Leitung zur Förderung der Flüssigkeit verläuft von dem Tank bis zu der Pumpe und von der Pumpe bis zu dem Injektor, wobei der Leitungsabschnitt von der Pumpe bis zu dem Injektor auch als Druckleitung bezeichnet wird.

Die beschriebene Pumpe kann vom Typ her auch als Orbitalpumpe bezeichnet werden. Dieser Pumpentyp ist beispielsweise in den Patentanmeldungen DE 10 2013 104 250, DE 10 2013 104 245 A1, DE 10 2013 104 242 A1 und DE 10 2013 102 129 A1 beschrieben und insbesondere diese Dokumente können zur ergänzenden Erläuterung herangezogen werden. Durch die Bewegung der mindestens einen Abdichtung, bzw. durch die Bewegung des Exzenters, wird ein bewegliches Pumpenvolumen in einem Förderkanal zwischen dem Pumpengehäuse und der verformbaren Membran von dem Einlass der Pumpe zu dem Auslass der Pumpe bewegt, so dass Flüssigkeit in dem beweglichen Pumpenvolumen gefördert wird. Durch die verschiebbare Abdichtung ist das bewegliche Pumpenvolumen in dem Förderweg ebenfalls verschiebbar. Die verschiebbare Abdichtung ist im Wesentlichen dadurch gebildet, dass die verformbare Membran von dem Exzenter abschnittsweise mit ihrer Außenfläche gegen eine Innenfläche des Pumpengehäuses gedrückt wird. Die verformbare Membran befindet sich in einem Spalt zwischen dem Exzenter und dem Pumpengehäuse, welcher den Exzenter von dem Einlass zu dem Auslass in einer Umfangsrichtung umläuft. In diesem Spalt ist auch der Förderkanal zwischen dem Pumpengehäuse und dem verformbaren Element, der den Einlass und den Auslass der Pumpe miteinander verbindet, positioniert.

Der Drucksensor steht mit dem Auslass der Pumpe so in Verbindung, dass ein an dem Auslass vorliegender Flüssigkeitsdruck von dem Drucksensor gemessen werden kann.

Schritt a) betrifft die reguläre Förderung von Flüssigkeit mit der Pumpe, also den ganz regulären Betrieb der Pumpe. Schritt a) kann vorzugsweise auch einen Dosierbetrieb umfassen, bei welchem die Pumpe zur Dosierung von Flüssigkeit verwendet wird. Die in Schritt b) erfolgende Überwachung eines zeitlichen Druckverlaufs des Drucks an dem Auslass wird vorzugsweise kontinuierlich durchgeführt, um die in Schritt c) zum Feststellen der Winkelposition notwendigen charakteristischen Merkmale des zeitlichen Verlaufs des Drucks an dem Auslass zu jedem beliebigen Zeitpunkt feststellen zu können.

Charakteristische Merkmale können verschiedene Singularitäten in dem zeitlichen Druckverlauf sein, wie beispielsweise Sprünge, Maxima oder Minima des zeitlichen Signals. Charakteristische Merkmale des Druckverlaufs können insbesondere auch als charakteristische Abweichungen oder charakteristische Veränderungen des Drucksignals bezeichnet werden. Charakteristische Merkmale des Drucksignals ermöglichen insbesondere einen Rückschluss auf die Winkelposition des Exzenters. Hintergrund der Feststellung einer Winkelposition des Exzenters anhand der charakteristischen Merkmale des Drucksignals ist, dass aufgrund der Drehung des Exzenters und der unterschiedlichen Winkelposition des Exzenters ein unterschiedlicher Ausstoß von Flüssigkeit an dem Auslass der Pumpe erfolgt. Beispielsweise gibt es eine bestimmte Winkelposition, bei welcher ein Pumpenvolumen innerhalb des Förderwegs erstmals mit dem Auslass verbunden wird. Dann ergibt sich unter Umständen eine Rückströmung von Flüssigkeit von dem Auslass zurück in die Pumpe, bzw. in das bewegliche Pumpenvolumen. Dieser Rückstrom führt zu einem charakteristischen Merkmal des zeitlichen Verlaufs des Drucks an dem Auslass. Es hat sich als vorteilhaft herausgestellt, derartige charakteristische Merkmale des Druckverlaufs zu nutzen, um eine Winkelposition des Exzenters der Pumpe zu bestimmen.

Weiterhin ist das Verfahren vorteilhaft, wenn eine Winkelposition des Exzenters in Schritt c) anhand eines von dem Drucksensor bestimmten, schlagartigen Druckabfalls als charakteristisches Merkmal des zeitlichen Druckverlaufs festgestellt wird.

Ein schlagartiger Druckabfall ergibt sich beispielsweise durch die weiter oben beschriebene Situation, wenn der Auslass der Pumpe erstmals mit einem beweglichen Pumpenvolumen innerhalb des Förderwegs der Pumpe verbunden ist. Dann strömt Flüssigkeit von dem Auslass zurück in den Förderweg innerhalb der Pumpe. Hierdurch sinkt der Druck an dem Auslass ab. Dieser Effekt kann als schlagartiger Druckabfall erkannt werden. Gegebenenfalls ist es auch möglich, dass nicht der schlagartige Druckabfall, sondern ein sich aufgrund des schlagartigen Druckabfalls und eines anschließenden Wiederanstiegs ergebendes Druckminimum des Druckverlaufs als charakteristisches Merkmal des Druckverlaufs verwendet wird. Ein derartig schlagartiger Druckabfall lässt darauf schließen, dass die Winkelposition des Exzenters sich gerade in der Nähe des Einlasses befindet und dementsprechend eine verschiebbare Abdichtung kurz zuvor den Auslass überfahren hat. Aus diesem Grund ergibt sich zu diesem Zeitpunkt die erstmalige Verbindung zwischen einem Pumpenvolumen innerhalb des Förderwegs und dem Auslass.

Weiterhin vorteilhaft ist das Verfahren, wenn eine Winkelposition des Exzenters in Schritt c) anhand einer von dem Drucksensor bestimmten Druckspitze als charakteristisches Merkmal des zeitlichen Druckverlaufs ermittelt wird.

Nachdem der Druck bei der erstmaligen Verbindung eines Pumpenvolumens in dem Förderweg mit dem Auslass abgefallen ist, ergibt sich aufgrund der weiteren Bewegung des Exzenters und der daraus resultierenden weiteren Verschiebung der Abdichtung ein Ansteigen des Drucks an dem Auslass. Dieses Ansteigen führt zu einer Druckspitze oder einem Druckmaximum. Auch diese Druckspitze bzw. auch dieses Druckmaximum kann als charakteristisches Merkmal zum Erkennen einer Winkelposition des Exzenters ausgewertet werden.

Gemäß einer besonders vorteilhaften Ausgestaltung werden sowohl ein schlagartiger Druckabfall als auch eine auf den schlagartigen Druckabfall zeitlich nachfolgende Druckspitze zusammen verwendet, um dadurch eine Winkelposition des Exzenters zu identifizieren. Dies geschieht beispielsweise dadurch, dass nach Auftreten eines schlagartigen Druckabfalls auf eine direkt hierauf folgende Druckspitze gewartet wird und diese Druckspitze dann als charakteristisches Merkmal verwendet wird, um eine Winkelposition des Exzenters festzustellen. Der schlagartige Druckabfall ist dann eine Art vorgelagertes Kriterium, so dass durch die gemeinsame Berücksichtigung von schlagartigem Druckabfall und Druckspitze eine erhöhte Sicherheit besteht, eine vorliegende Winkelposition des Exzenters wirklich exakt zu bestimmen.

Weiterhin ist das Verfahren vorteilhaft, wenn ein mittleres Druckniveau, welches an dem Drucksensor anliegt, bei der Auswertung des charakteristischen Merkmals in Schritt c) berücksichtigt wird.

Üblicherweise besteht in dem Druckleitungsabschnitt zwischen dem Sektor und der Pumpe eine Abhängigkeit zwischen dem mit Flüssigkeit gefüllten Volumen in diesem Druckleitungsabschnitt und dem vorliegenden Druck. Dies bedeutet insbesondere, dass der Druck in dem Druckleitungsabschnitt an dem Auslass der Pumpe nicht schlagartig aufgebaut wird, sondern die Pumpe zunächst Flüssigkeit fördern muss, bevor der Druck dort entsteht. Daher können sich an dem Auslass unterschiedliche Druckniveaus ergeben. Es hat sich herausgestellt, dass je nach Druckniveau charakteristische Merkmale des Drucksignals, die im Rahmen von Schritt c) ausgewertet werden, unterschiedlich ausgeprägt sein können. Daher ist es vorteilhaft, das mittlere Druckniveau an dem Auslass zu berücksichtigen.

Weiterhin ist das Verfahren vorteilhaft, wenn die Schritte a), b) und c) zeitlich parallel zueinander ausgeführt werden. Weiter vorne wurde bereits beschrieben, dass die Förderung von Flüssigkeit mit der Pumpe in Schritt a) die reguläre Förderung von Flüssigkeit mit der Pumpe betrifft. Besonders vorteilhaft ist es, wenn die Überwachung und das Feststellen der Winkelposition gemäß den Verfahrensschritten b) und c) dauerhaft und kontinuierlich während des gesamten Förderbetriebs der Pumpe gemäß Schritt a) durchgeführt werden. Dann ist eine besonders hohe Sicherheit vorhanden, die Winkelposition des Exzenters immer exakt zu kennen.

Weiterhin ist das Verfahren vorteilhaft, wenn der Verfahrensschritt c) nur ausgeführt wird, wenn ein an dem Drucksensor anliegendes mittleres Druckniveau oberhalb eines Schwelldrucks liegt.

Es hat sich herausgestellt, dass die beschriebenen charakteristischen Merkmale des Drucksignals unter Umständen gar nicht vorliegen oder nur sehr schwach ausgeprägt sind, wenn das Druckniveau an dem Auslass niedrig (unterhalb eines Schwelldrucks) ist. Beispielsweise ist der weiter oben beschriebene Rückstromeffekt, welcher zu einem schlagartigen Druckabfall führt, nicht zu verzeichnen, wenn das Druckniveau an dem Auslass sehr niedrig ist. Daher ist es vorteilhaft, das Verfahren nur unter der Bedingung auszuführen, dass auch tatsächlich charakteristische Merkmale des Druckverlaufs vorliegen, die dazu geeignet sind, eine Winkelposition des Exzenters genau festzustellen. Dies kann durch die beschriebene Berücksichtigung eines Schwelldrucks erreicht werden.

Auch vorteilhaft ist das Verfahren, wenn sich an dem mindestens einen Auslass der mindestens einen Pumpe eine Druckleitung anschließt, die zu einem Injektor zur dosierten Abgabe der Flüssigkeit führt und wobei der Drucksensor an dieser Druckleitung angeordnet und dazu eingerichtet ist, den Druck in der Druckleitung zu messen.

Der Drucksensor ist vorzugsweise sehr nah an dem Auslass angeordnet, um die beschriebenen Druckeffekte, die sich aufgrund der Eigenschaften der Pumpe an dem Auslass ergeben, besonders exakt zu messen. Diese Druckeffekte unterliegen unter Umständen einer Verfälschung, die sich durch Schwankungen des zwischen dem Auslass der Pumpe und dem Drucksensor existierenden Flüssigkeitsvolumens ergibt. Wenn der Drucksensor nah an dem Auslass angeordnet ist, ist dieses Flüssigkeitsvolumen klein, was auch die auftretende Verfälschung verkleinert.

Unter Umständen kann es aber auch vorteilhaft sein, den Drucksensor (örtlich) weiter entfernt von dem Auslass der Pumpe näher an einem Injektor anzuordnen. Gegebenenfalls ist der Drucksensor dort auch geeignet, um die notwendigen charakteristischen Merkmale des Drucksignals zu identifizieren. Gleichzeitig kann der Drucksensor aber auch noch dazu genutzt werden, den für eine Dosierung von Flüssigkeit mit dem Injektor am Injektor vorliegenden Druck zu überwachen. In diesem Zusammenhang ist es insbesondere vorteilhaft, wenn der Einfluss von Schwankungen des Flüssigkeitsvolumens zwischen dem Drucksensor und dem Auslass berücksichtigt wird, um den einen Zusammenhang zwischen den charakteristischen Merkmalen des Druckverlaufs und der Winkelposition des Exzenters festzulegen. Dies kann beispielsweise in Form von Kennfeldern geschehen, die diesen Zusammenhang unter Berücksichtigung von Quereinflussgrößen angeben. Quereinflussgrößen sind hier insbesondere Quereinflüsse auf das genannte Flüssigkeitsvolumen zwischen Auslass und Drucksensor, beispielsweise die Fördergeschwindigkeit, das Druckniveau etc.

Weiterhin ist das Verfahren vorteilhaft, wenn sich an den mindestens einen Auslass der Pumpe ein Druckspeicher und ein Injektor anschließen und die Pumpe die Flüssigkeit in den Druckspeicher fördert, wobei die von der Vorrichtung abgegebene Menge an Flüssigkeit über den Druckspeicher und die Öffnungszeit des Injektors einstellbar ist.

Besonders vorteilhaft ist in diesem Zusammenhang, wenn Druckschwankungen in dem Druckspeicher mit Hilfe des Drucksensors erkannt werden und bei der Dosierung über die Öffnungszeit des Injektors berücksichtigt werden. Der Druckspeicher ist vorzugsweise von der bereits beschriebenen Druckleitung von dem Injektor zu der Pumpe gebildet. Diese Druckleitung kann beispielsweise elastisch ausgestaltet sein, so dass sie als Druckspeicher wirkt.

Die Pumpe kann einen elektrischen Antrieb haben, der mit einem Elektromotor ausgebildet ist. Ein Elektromotor hat üblicherweise einen Stator mit Elektromagneten und einen Rotor, wobei der Rotor entweder ebenfalls mit Elektromagneten oder mit Permanentmagneten ausgeführt sein kann. Die beschriebenen Hall-Sensoren sind vorzugsweise an bzw. in diesem elektrischen Antrieb der Pumpe angeordnet. Die Erkennung einer Winkelpositionsveränderung des Exzenters mit Hilfe der Hall-Sensoren basiert beispielsweise auf Veränderungen des elektromagnetischen Feldes an dem elektrischen Antrieb, die sich durch die Bewegung des Rotors des elektrischen Antriebs ergeben und die zu Fluktuationen eines an dem Hall-Sensor gemessenen Stroms oder einer an dem Hall-Sensor erzeugten Spannung durch die Bewegung des Exzenters und des Antriebs der Pumpe führen. Diese Detektion mit Hilfe des Hall-Sensors ermöglicht allerdings nur Winkelpositionsveränderungen festzustellen. Eine absolute Bestimmung der Winkelposition des Exzenters ist hierüber nicht möglich. Dies gilt insbesondere, wenn die genaue Einbauposition des Rotors bzw. des elektrischen Antriebs relativ zu dem Exzenter nicht bekannt ist. Es ist allerdings möglich, ausgehend von der gemäß Verfahrensschritt c) bestimmten Winkelposition, Winkelpositionsveränderungen mit den Hall-Sensoren zu ermitteln und dadurch indirekt beliebige Winkelpositionen genau zu detektieren. Es können dann nicht nur Winkelpositionen genau detektiert werden, die anhand eines charakteristischen Merkmals des Druckverlaufs erkennbar sind. So ist eine vollständige Auflösung der Winkelposition des Exzenters für jede beliebige Position möglich. Dies wäre durch das charakteristische Merkmal des Druckverlaufs alleine nicht realisierbar, weil charakteristische Merkmale des Drucklaufs, die sich zum Feststellen einer Winkelposition eignen, nur bei ganz bestimmten Winkelpositionen des Exzenters auftreten.

Weiterhin ist das Verfahren vorteilhaft, wenn das Feststellen einer Winkelposition des Exzenters der Pumpe anhand von mindestens einem charakteristischen Merkmal des zeitlichen Druckverlaufs in Abhängigkeit von einer vorliegenden Drehgeschwindigkeit des Exzenters der Pumpe erfolgt.

Je nachdem, wie groß eine Drehgeschwindigkeit des Exzenters der Pumpe ist, sind die charakteristischen Merkmale des zeitlichen Druckverlaufs unterschiedlich ausgeprägt. Daher ist es vorteilhaft, die Drehgeschwindigkeit des Exzenters zusätzlich zu berücksichtigen, um eine höhere Exaktheit der bestimmten Winkelposition in Schritt c) zu ermöglichen. Der Einfluss der Drehgeschwindigkeit des Exzenters hängt insbesondere mit Strömungseffekten der Flüssigkeit innerhalb der Pumpe zusammen, die sich bei unterschiedlichen Dreh- und Fördergeschwindigkeiten der Pumpe unterschiedlich ausbilden.

Die Erfindung, sowie das technische Umfeld werden nachfolgend anhand der Figuren näher erläutert. Die Figuren zeigen besonders bevorzugte Ausführungsbeispiele, auf die die in den Patentansprüchen definierte Erfindung jedoch nicht begrenzt ist. Insbesondere ist darauf hinzuweisen, dass die Figuren und vor allem die in den Figuren dargestellten Größenverhältnissen nur schematisch sind. Es zeigen
- Fig. 1:: eine geeignete Pumpe (nach Art einer Orbitalpumpe),
- Fig. 2:: einen Schnitt durch eine geeignete Pumpe (nach Art einer Orbitalpumpe),
- Fig. 3:: einen weiteren Schnitt durch eine geeignete Pumpe (nach Art einer Orbitalpumpe),
- Fig. 4:: noch einen weiteren Schnitt durch eine geeignete Pumpe (nach Art einer Orbitalpumpe),
- Fig. 5:: ein erstes Diagramm eines Druckverlaufs,
- Fig. 6:: ein zweites Diagramm eines Druckverlaufs, und
- Fig. 7:: ein Kraftfahrzeug, aufweisend eine Vorrichtung mit einer geeigneten Pumpe (nach Art einer Orbitalpumpe).

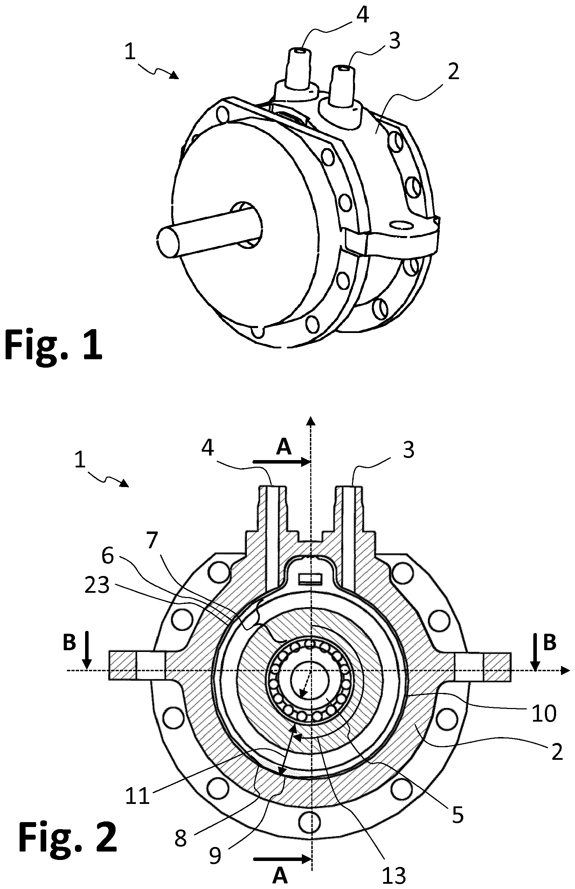

Fig. 1 zeigt eine beschriebene Pumpe 1 für das beschriebene Verfahren und für eine beschriebene Vorrichtung mit einem Pumpengehäuse 2, einem Einlass 3 und einem Auslass 4 in einer isometrischen Ansicht. Die in Fig. 1 dargestellte Pumpe 1 ist in Fig. 2 geschnitten dargestellt. Zu erkennen ist ebenfalls das Pumpengehäuse 2 mit dem Einlass 3 und dem Auslass 4. In dem Pumpengehäuse 2 ist der Exzenter 5 drehbar angeordnet. In einem Spalt 11 zwischen dem Exzenter 5 und dem Pumpengehäuse 2 befindet sich eine verformbare Membran 7 und der Förderweg 8, der von einer Außenfläche 23 der verformbaren Membran 7 und einer Innenfläche 6 des Pumpengehäuses 2 begrenzt ist. Die verformbare Membran 7 wird von dem Exzenter 5 abschnittsweise gegen eine Innenfläche des Pumpengehäuses 2 gedrückt, so dass eine Außenfläche 23 der verformbaren Membran an dem Pumpengehäuse 2 anliegt. So wird eine verschiebbare Abdichtung 9 ausgebildet, die durch eine Drehung des Exzenters in einer Förderrichtung von dem Einlass 3 zu dem Auslass 4 verschiebbar ist. Die Förderrichtung ist durch eine Änderung der Drehrichtung des Exzenters 5 auch umkehrbar. Eine Winkelposition 13 des Exzenters 5 ist beispielsweise durch die Position der engsten Stelle in dem Spalt 11 zwischen Exzenter 5 und Pumpengehäuse 2 definiert. An dieser, als Winkelposition 13 bezeichneten Stelle befindet sich üblicherweise auch die verschiebbare Abdichtung 9.

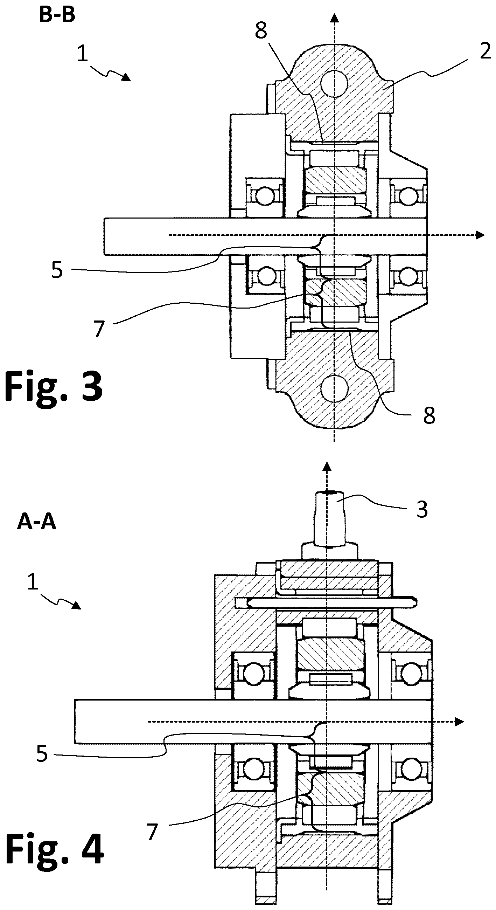

Fig. 3 zeigt den in Fig. 2 markierten Schnitt B-B durch die Pumpe 1. Zu erkennen sind das Pumpengehäuse 2, der Exzenter 5, die verformbare Membran 7, sowie der Förderweg 8.

Fig. 4 zeigt entsprechend hierzu den mit A-A markierten Schnitt durch die Pumpe 1.

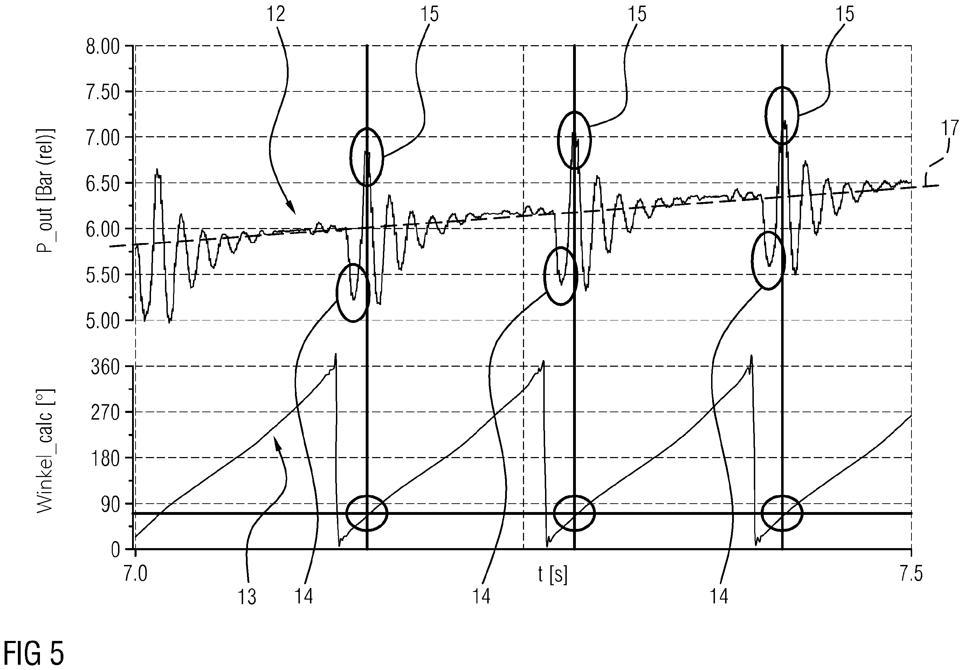

Fig. 5 verdeutlicht in einem Diagramm den zeitlichen Druckverlauf 12 und die Winkelposition 13 des Exzenters der Pumpe parallel zu dem zeitlichen Druckverlauf 12. Zu erkennen sind charakteristische Merkmale des Druckverlaufs, insbesondere ein schlagartiger Druckabfall 14 und eine Druckspitze 15. Zu erkennen ist, wie anhand dieser charakteristischen Merkmale des Druckverlaufs eine Winkelposition 13 des Exzenters festgestellt werden kann, weil bestimmte charakteristische Merkmale des Druckverlaufs 12 immer bei bestimmten Winkelpositionen 13 des Exzenters auftreten. Ebenfalls dargestellt ist ein mittleres Druckniveau 17 an dem Auslass. Die charakteristischen Merkmale stellen sich als Abweichungen von diesem mittleren Druckniveau dar.

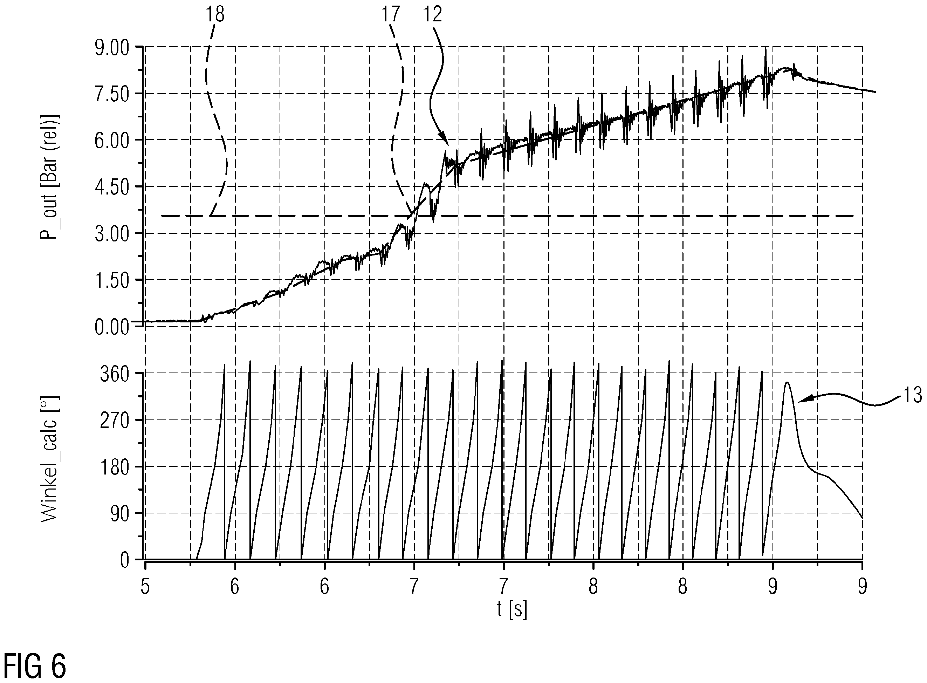

Fig. 6 ist ein weiteres Diagramm, in welchem der Druckverlauf 12 und die Winkelposition 13 dargestellt sind. Zu erkennen ist hier auch ein mittleres Druckniveau 17, welches in dem Diagramm gemäß Fig. 6 kontinuierlich ansteigt. Erst wenn das mittlere Druckniveau 17 einen Schwelldruck 18 überschritten hat, sind charakteristische Merkmale des Druckverlaufs 12 ausreichend ausgeprägt, so dass eine Feststellung der Winkelposition 13 anhand der charakteristischen Merkmale des Druckverlaufs 12 möglich ist.

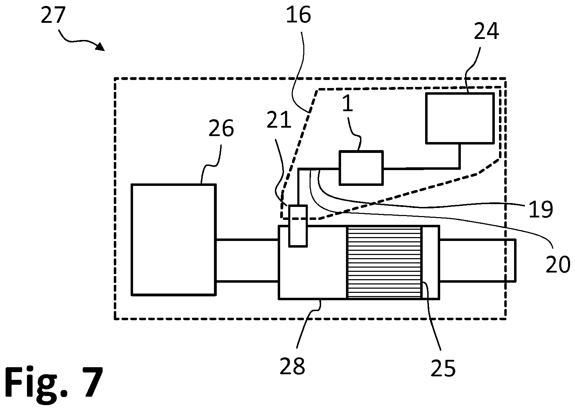

Fig. 7 zeigt ein Kraftfahrzeug 27, aufweisend eine Verbrennungskraftmaschine 26 und eine Abgasbehandlungsvorrichtung 22 mit einem SCR-Katalysator 25 zur Reinigung der Abgase der Verbrennungskraftmaschine 26. Der Abgasbehandlungsvorrichtung 22 ist ein flüssiges Additiv zur Abgasreinigung mit einer Vorrichtung 16 zuführbar. Die Vorrichtung 16 hat hierfür eine Pumpe 1, einen Tank 24, in welchem die Flüssigkeit gespeichert ist, sowie einen Injektor 21, mit welchem die Flüssigkeit der Abgasbehandlungsvorrichtung 22 zuführbar ist. Die Pumpe 1 und der Injektor 21 sind über eine als Druckspeicher 20 ausgeführte Druckleitung 19 miteinander verbunden.

## Patentansprüche

1. Verfahren zum Betrieb einer Vorrichtung (16) zur dosierten Bereitstellung einer Flüssigkeit, zumindest aufweisend
- mindestens eine Pumpe (1) zur Förderung der Flüssigkeit, wobei die mindestens eine Pumpe (1) ein Pumpengehäuse (2) mit mindestens einem Einlass (3) und mindestens einem Auslass (4) aufweist, wobei an dem Pumpengehäuse (2) ein Exzenter (5) angeordnet ist und wobei zwischen dem Pumpengehäuse (2) und dem Exzenter (5) eine verformbare Membran (7) angeordnet ist, wobei die verformbare Membran (7) und das Pumpengehäuse (2) mindestens einen Förderweg (8) von dem mindestens einen Einlass (3) zu dem mindestens einen Auslass (4) begrenzen und mindestens eine Abdichtung (9) des Förderwegs (8) ausbilden, wobei die mindestens eine Abdichtung (9) durch eine Bewegung des Exzenters (5) zur Förderung der Flüssigkeit entlang des Förderwegs (8) verschiebbar ist;
- und weiter aufweisend mindestens einen Drucksensor (10), der mit dem Auslass der Pumpe verbunden ist,
wobei das Verfahren zumindest die folgenden Schritte aufweist:
a) Fördern von Flüssigkeit mit der Pumpe (1);
b) Überwachen eines zeitlichen Druckverlaufs (12) des Drucks an dem Auslass (4) der Pumpe (1) während der Förderung mit dem mindestens einen Drucksensor (10);
c) Feststellen einer Winkelposition (13) des Exzenters (5) der Pumpe (1) anhand von mindestens einem charakteristischen Merkmal (14, 15) des zeitlichen Druckverlaufs (12) an dem Auslass (4); wobei die Pumpe (1) mindestens einen Hall-Sensor aufweist, mit welchem eine Winkelpositionsveränderung des Exzenters (5) erkannt werden kann, wobei das Verfahren weiter folgenden Schritt umfasst:
d) Bestimmen einer veränderten Winkelposition (13), ausgehend von der in Schritt c) ermittelten Winkelposition (13) anhand der mit dem Hall-Sensor festgestellten Winkelpositionsveränderung.

2. Verfahren nach Patentanspruch 1, wobei eine Winkelposition (13) des Exzenters (5) in Schritt c) anhand eines von dem Drucksensor (10) bestimmten, schlagartigen Druckabfalls (14) als charakteristischen Merkmal (14, 15) des zeitlichen Druckverlaufs (12) festgestellt wird.

3. Verfahren nach einem der Patentansprüche 1 oder 2, wobei eine Winkelposition (13) des Exzenters (5) in Schritt c) anhand einer von dem Drucksensor (10) bestimmten Druckspitze (15) als charakteristischen Merkmal (14, 15) des zeitlichen Druckverlaufs (12) ermittelt wird.

4. Verfahren nach einem der vorhergehenden Patentansprüche, wobei ein mittleres Druckniveau (17), welches an dem Drucksensor (10) anliegt, bei der Auswertung des charakteristischen Merkmals (14, 15) in Schritt c) berücksichtigt wird.

5. Verfahren nach einem der vorhergehenden Patentansprüche, wobei die Schritte a), b) und c) zeitlich parallel zueinander ausgeführt werden.

6. Verfahren nach einem der vorhergehenden Patentansprüche, wobei der Verfahrensschritt c) nur ausgeführt wird, wenn ein an dem Drucksensor (10) anliegendes, mittleres Druckniveau (17) oberhalb eines Schwelldrucks (18) liegt.

7. Verfahren nach einem der vorhergehenden Patentansprüche, wobei sich an dem mindestens einen Auslass (4) der mindestens einen Pumpe (1) eine Druckleitung (19) anschließt, die zu einem Injektor (21) zur dosierten Abgabe der Flüssigkeit führt und wobei der Drucksensor (10) an dieser Druckleitung (19) angeordnet und dazu eingerichtet ist, den Druck in der Druckleitung (19) zu messen.

8. Verfahren nach einem der vorhergehenden Patentansprüche, wobei sich an den mindestens einen Auslass (4) der Pumpe (1) ein Druckspeicher (20) und ein Injektor (21) anschließen, und die Pumpe (1) die Flüssigkeit in den Druckspeicher (20) fördert, wobei die von der Vorrichtung (16) abgegebene Menge an Flüssigkeit über den Druck in dem Druckspeicher (20) und die Öffnungszeit des Injektors (21) einstellbar ist.

9. Verfahren nach einem der vorhergehenden Patentansprüche, wobei das Feststellen einer Winkelposition des Exzenters (5) der Pumpe (1) anhand von mindestens einem charakteristischen Merkmal (14, 15) des zeitlichen Druckverlaufs (12) in Abhängigkeit von einer vorliegenden Drehgeschwindigkeit des Exzenters (5) der Pumpe (1) erfolgt.

## Claims

1. Method for operating a device (16) for the dosed supply of a liquid, at least having
- at least one pump (1) for delivering the liquid, wherein the at least one pump (1) has a pump housing (2) with at least one inlet (3) and at least one outlet (4), wherein an eccentric (5) is arranged on the pump housing (2) and wherein a deformable diaphragm (7) is arranged between the pump housing (2) and the eccentric (5), wherein the deformable diaphragm (7) and the pump housing (2) delimit at least one delivery path (8) from the at least one inlet (3) to the at least one outlet (4) and form at least one seal (9) of the delivery path (8), wherein the at least one seal (9) is displaceable along the delivery path (8) by way of a movement of the eccentric (5) for the purpose of delivering the liquid;
- and further having at least one pressure sensor (10) which is connected to the outlet of the pump, wherein the method has at least the following steps:
a) delivering liquid by way of the pump (1);
b) monitoring, during the delivery, a temporal pressure profile (12) of the pressure at the outlet (4) of the pump (1) by way of the at least one pressure sensor (10);
c) establishing an angle position (13) of the eccentric (5) of the pump (1) on the basis of at least one characteristic feature (14, 15) of the temporal pressure profile (12) at the outlet (4); wherein the pump (1) has at least one Hall sensor by way of which a change in angle position of the eccentric (5) can be detected, wherein the method further comprises the following step:
d) determining a changed angle position (13), starting from the angle position (13) determined in step c), on the basis of the change in angle position established by way of the Hall sensor.

2. Method according to Patent Claim 1, wherein an angle position (13) of the eccentric (5) is established in step c) on the basis of an abrupt pressure drop (14), determined by the pressure sensor (10), as a characteristic feature (14, 15) of the temporal pressure profile (12).

3. Method according to either of Patent Claims 1 and 2, wherein an angle position (13) of the eccentric (5) is determined in step c) on the basis of a pressure peak (15), determined by the pressure sensor (10), as a characteristic feature (14, 15) of the temporal pressure profile (12).

4. Method according to one of the preceding patent claims, wherein a mean pressure level (17), which prevails at the pressure sensor (10), is taken into consideration during the analysis of the characteristic feature (14, 15) in step c).

5. Method according to one of the preceding patent claims, wherein the steps a), b) and c) are carried out temporally in parallel with one another.

6. Method according to one of the preceding patent claims, wherein the method step c) is carried out only if a mean pressure level (17), prevailing at the pressure sensor (10), is above a threshold pressure (18).

7. Method according to one of the preceding patent claims, wherein the at least one outlet (4) of the at least one pump (1) is adjoined by a pressure line (19) which leads to an injector (21) for the dosed dispensing of the liquid, and wherein the pressure sensor (10) is arranged on this pressure line (19) and is set up to measure the pressure in the pressure line (19).

8. Method according to one of the preceding patent claims, wherein the at least one outlet (4) of the pump (1) is adjoined by a pressure accumulator (20) and an injector (21), and the pump (1) delivers the liquid into the pressure accumulator (20), wherein the amount of liquid dispensed by the device (16) is adjustable via the pressure in the pressure accumulator (20) and the opening time of the injector (21).

9. Method according to one of the preceding patent claims, wherein the establishment of an angle position of the eccentric (5) of the pump (1) on the basis of at least one characteristic feature (14, 15) of the temporal pressure profile (12) takes place in dependence on a prevailing rotational speed of the eccentric (5) of the pump (1).

## Revendications

1. Procédé de fonctionnement d'un dispositif (16) de distribution dosée d'un liquide qui comporte au moins
- au moins une pompe (1) destinée à transporter le liquide, l'au moins une pompe (1) comportant un boîtier de pompe (2) pourvu d'au moins une entrée (3) et d'au moins une sortie (4), un excentrique (5) étant disposé au niveau du corps de pompe (2) et une membrane déformable (7) étant disposée entre le corps de pompe (2) et l'excentrique (5), la membrane déformable (7) et le corps de pompe (2) délimitant au moins un chemin de transport (8) allant de l'au moins une entrée (3) à l'au moins une sortie (4) et formant au moins une garniture d'étanchéité (9) du chemin de transport (8), l'au moins une garniture d'étanchéité (9) pouvant être déplacée par un mouvement de l'excentrique (5) pour transporter le liquide le long du chemin de transport (8) ;
- et comportant en outre au moins un capteur de pression (10) qui est relié à la sortie de la pompe,
le procédé comprenant au moins les étapes suivantes :
a) transporter du liquide à l'aide de la pompe (1) ;
b) surveiller une variation (12), au cours du temps, de la pression à la sortie (4) de la pompe (1) pendant le transport à l'aide de l'au moins un capteur de pression (10) ;
c) déterminer une position angulaire (13) de l'excentrique (5) de la pompe (1) sur la base d'au moins une caractéristique (14, 15) de la variation de pression (12) au cours du temps à la sortie (4) ; la pompe (1) comportant au moins un capteur à effet Hall permettant de détecter une variation de position angulaire de l'excentrique (5),
le procédé comprenant en outre l'étape suivante :
d) déterminer une position angulaire modifiée (13), à partir de la position angulaire (13) déterminée à l'étape c) sur la base de la variation de position angulaire déterminée avec le capteur à effet Hall.

2. Procédé selon la revendication 1, une position angulaire (13) de l'excentrique (5) étant déterminée à l'étape c) sur la base d'une chute de pression soudaine (14) déterminée par le capteur de pression (10) en tant que caractéristique (14, 15) de la variation de pression (12) au cours du temps.

3. Procédé selon l'une des revendications 1 ou 2, une position angulaire (13) de l'excentrique (5) étant déterminée à l'étape c) sur la base d'un pic de pression (15) déterminé par le capteur de pression (10) en tant que caractéristique (14, 15) de la variation de pression (12) au cours du temps.

4. Procédé selon l'une des revendications précédentes, un niveau de pression moyen (17) qui est appliqué au capteur de pression (10) étant pris en compte dans l'évaluation de la caractéristique (14, 15) à l'étape c).

5. Procédé selon l'une des revendications précédentes, les étapes a), b) et c) étant réalisées en parallèle.

6. Procédé selon l'une des revendications précédentes, l'étape c) du procédé n'étant exécutée que si un niveau de pression moyen (17) appliqué au capteur de pression (10) est supérieur à une pression seuil (18) .

7. Procédé selon l'une des revendications précédentes, l'au moins une sortie (4) de l'au moins une pompe (1) étant raccordée à une conduite de pression (19) qui mène à un injecteur (21) destiné à la distribution dosée du liquide et le capteur de pression (10) étant disposé au niveau de cette conduite de pression (19) et étant conçu pour mesurer la pression dans la conduite de pression (19).

8. Procédé selon l'une des revendications précédentes, un accumulateur de pression (20) et un injecteur (21) étant raccordés à au moins une sortie (4) de la pompe (1), et la pompe (1) transportant le liquide jusque dans l'accumulateur de pression (20), la quantité de liquide distribuée par le dispositif (16) pouvant être réglée par le biais de la pression dans l'accumulateur de pression (20) et du temps d'ouverture de l'injecteur (21).

9. Procédé selon l'une des revendications précédentes, la détermination d'une position angulaire de l'excentrique (5) de la pompe (1) étant effectuée sur la base d'au moins une caractéristique (14, 15) de la variation de pression (12) au cours du temps en fonction de la vitesse de rotation actuelle de l'excentrique (5) de la pompe (1).
